# FASCICULE DE BREVET EUROPEEN

(11) **EP 1 207 080 B1**
(45) Date de publication et mention de la délivrance du brevet: **11.02.2004**
(21) Numéro de dépôt: 01402763.5
(22) Date de dépôt: 25.10.2001
(51) Int. Cl.: B60R 9/06, B60R 9/10

(54) **Porte-bagages modulaire pour véhicule automobile**
Kraftfahrzeugmodulgepäckträger
Vehicle modular luggage carrier

(30) Priorité: 15.11.2000 FR 0014679
(43) Date de publication de la demande: 22.05.2002
(73) Titulaire: Peugeot Citroen Automobiles SA, 92200 Neuilly sur Seine (FR)
(72) Inventeur: Loughnane, Cathal, 92130 Issy les Moulineaux (FR)
(74) Mandataire: Robert, Jean-François

(56) Documents cités:
- DE-A- 4 241 008
- DE-A- 19 715 969
- FR-A- 2 558 774
- FR-A- 2 697 471
- US-A- 4 299 341

## Description

La présente invention concerne un porte-bagages pour véhicule automobile.

Elle se rapporte plus particulièrement à un porte-bagages prévu pour le transport de différents types d'objets encombrants tels qu'un ou plusieurs vélo(s), destiné à être fixé sur la structure d'un véhicule automobile en partie arrière de celui-ci.

On connaît des porte-bagages pour véhicule automobile constitués d'un ou de plusieurs bras ou tubes assemblés entre eux, formant un ensemble relié dans sa partie inférieure à la structure du véhicule au niveau du bouclier ou pare-chocs arrière, ou au soubassement du véhicule par exemple au niveau de l'emplacement traditionnel des moyens d'attelage du véhicule. Certains porte-bagages connus sont de surcroît fixés au véhicule en partie supérieure, par exemple à un volet ou hayon du véhicule.

Les bras ou tubes de ces porte-bagages sont généralement assemblés et maintenus solidaires entre eux par des moyens de fixation tels que des systèmes vis-écrou, des colliers de serrage, ou tout système équivalent garantissant un serrage efficace mais présentant notamment comme inconvénient d'imposer un temps de montage ou de démontage non négligeable et/ou d'exiger un effort de serrage important. L'emploi d'un outil approprié tel qu'une clé de serrage peut dans certains cas s'avérer nécessaire. De plus, les pièces de fixation telles que les vis ou écrous sont toujours susceptibles de se perdre.

En conséquence, on rencontre couramment de tels porte-vélos qui ne sont pas assemblés ou démontés de façon complète à chaque utilisation. L'ensemble de bras ou tubes constituant le porte-bagages est généralement fixé d'un seul tenant sur le véhicule ou retiré en fonction du besoin. Se pose alors le problème du rangement du porte-vélo en cas de non-utilisation. Un tel porte-bagage non démonté a en effet un encombrement important qui peut s'avérer gênant dans tout espace de rangement et à fortiori dans le coffre du véhicule.

On notera que des problèmes d'encombrement sont également fréquents dans le cas des porte-bagages pourvus de bras ou tubes reliés entre eux de façon rigide et définitive, par exemple par soudage ou emmanchement forcé.

On connaît également des porte-bagages constitués de bras ou tubes formant un ensemble monté à demeure sur le véhicule, l'ensemble étant apte à occuper une première position escamotée sensiblement au niveau du bouclier ou pare-chocs arrière, lorsque l'utilisation du porte-bagages n'est pas souhaitée, et une seconde position déployée, résultant du coulissement et/ou de la rotation de certains bras ou tubes, permettant de configurer le porte-bagages en vue de son utilisation classique. Le document EP 566843 décrit un porte-bagages de ce type.

DE 197 15 969 sert de base pour la présentation en deux parties de la revendication 1.

De tels porte-bagages présentent toutefois l'inconvénient d'imposer des exigences d'encombrement délicates en raison notamment du mouvement de coulissement du porte-bagages entre ces deux positions. Un tel porte-bagages peut par ailleurs être difficilement compatible avec certaines formes de style du véhicule ou peut dégrader celles-ci de façon regrettable au niveau du bouclier ou pare-choc arrière, étant donné qu'il doit être accessible directement de l'extérieur du véhicule à la façon d'un tiroir.

Le but de la présente invention est de pallier les inconvénients ci-dessus.

Elle a donc pour objet un porte-bagages modulaire pour véhicules, fixé à la partie arrière du véhicule, comprenant un châssis en forme de U inversé dans un plan sensiblement vertical, caractérisé en ce qu'une traverse reliant les deux branches du U est fixée sur les extrémités supérieures respectives des branches via des moyens d'ancrage verrouillables/déverrouillables manuellement, tandis que les extrémités inférieures des branches sont reliées à la structure du véhicule par des moyens de bridage, également verrouillables/déverrouillables manuellement lors de la rotation des branches autour de deux axes sensiblement longitudinaux par rapport au véhicule, situés respectivement à proximité des extrémités inférieures des deux branches.

Le porte-bagages modulaire de véhicule automobile selon l'invention peut également comporter une ou plusieurs des caractéristiques suivantes :
- les moyens de bridage respectifs des extrémités inférieures des branches avec la structure du véhicule sont des systèmes de type quart-de-tour dans lequel un pion solidaire de l'extrémité inférieure de chaque branche, coopère avec un logement correspondant formé dans un boîtier solidaire de la structure du véhicule,
- les moyens d'ancrage d'une première extrémité de la traverse avec l'une des branches du U est un système de type quart-de-tour, dans lequel un pion solidaire de l'extrémité supérieure de ladite branche coopère avec un logement correspondant formé sur la traverse, de sorte que la traverse peut pivoter autour de sa première extrémité selon l'axe du pion et se trouve verrouillée à sa première extrémité lorsqu'elle s'inscrit dans le plan formé par le U,
- les moyens d'ancrage de la seconde extrémité de la traverse avec l'une des branches du U est un système par enclenchement dans lequel un pêne est monté mobile sur l'extrémité supérieure de ladite branche, entre une position escamotée permettant de positionner librement la seconde extrémité de la traverse au droit de l'extrémité supérieure de ladite branche, tout en autorisant le pivotement de la traverse autour de sa première extrémité, et une position déployée, retrouvée sous l'action d'un moyen de rappel, dans laquelle le pêne est introduit dans un logement formé sur la traverse, de sorte que la seconde extrémité de la traverse est emprisonnée entre le pêne et une butée solidaire de la branche,
- au moins un bras peut être fixé à une première de ses extrémités sur la traverse, dans le plan formé par le U, via des moyens d'ancrage verrouillables/déverrouillables manuellement,
- une pluralité de zones d'ancrage sont ménagées sur la traverse de sorte que le bras peut être fixé au niveau de l'une quelconque desdites zones d'ancrage sur la traverse ou qu'une pluralité de bras peuvent être fixés sur celle-ci en différentes zones d'ancrage respectives,
- les moyens d'ancrage de la traverse avec au moins l'un des bras sont constitués d'un système par enclenchement
   dans lequel au moins un crochet est monté mobile sur la première extrémité dudit bras adjacente à la traverse, entre une position inactive permettant de positionner librement la première extrémité du bras au droit de la traverse, et une position active, retrouvée sous l'action d'un moyen de rappel, dans laquelle le crochet est au moins partiellement introduit dans un logement formé sur la traverse et coopère en appui avec un rebord dudit logement, afin de solidariser le bras avec la traverse,
- une seconde extrémité de l'un au moins des bras montés sur la traverse peut être prolongée de façon sensiblement perpendiculaire au plan formé par le U, par un support oblong apte à supporter une charge embarquée, le support étant fixé sur le bras via des moyens d'ancrage verrouillables/déverrouillables manuellement,
- au moins un support oblong peut être fixé à l'une de ses extrémités sur la traverse, de façon sensiblement perpendiculaire au plan formé par le U, au niveau de l'une quelconque des zones d'ancrage ou qu'une pluralité de supports oblongs peuvent être fixés sur celle-ci en différentes zones d'ancrage respectives,
- les moyens d'ancrage de l'un au moins des supports oblongs sur un bras correspondant et/ou sur la traverse sont constitués d'un système par enclenchement dans lequel au moins un crochet est monté mobile sur une extrémité avant du support oblong, entre une position inactive permettant de positionner librement ladite extrémité avant du support oblong au droit de la seconde extrémité du bras et/ou de la traverse, et une position active, retrouvée sous l'action d'un moyen de rappel, dans laquelle le crochet est au moins partiellement introduit dans un logement formé sur le bras et/ou sur la traverse et coopère en appui avec un rebord dudit logement, afin de solidariser le support oblong avec le bras et/ou la traverse,
- les moyens d'ancrage entre la seconde extrémité de la traverse et l'une des branches du U comportent un patin de commande ou bouton poussoir monté coulissant sur un flan de la branche et relié au pêne via un ensemble pignon-crémaillère, de sorte que son coulissement provoque le déplacement du pêne,
- les moyens d'ancrage entre d'une part les bras et d'autre part la traverse et/ou les supports oblongs comportent chacun un patin de commande ou bouton poussoir monté coulissant sur le bras correspondant et/ou le support oblong correspondant, et relié au crochet des moyens d'ancrage via un ensemble pignon-crémaillère, de sorte que son coulissement provoque le déplacement du crochet,

L'invention concerne aussi un véhicule automobile selon la revendication 13.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue de côté d'un véhicule automobile pourvu d'un porte-bagages modulaire selon l'invention,
- la figure 2 est une vue en perspective du porte-bagages modulaire de la figure 1,
- les figures 3 et 4 sont des vues respectivement de dessus et de l'arrière du véhicule, illustrant le montage de deux branches du porte-bagages modulaire de la figure 1,
- les figures 5 et 6 sont des vues respectivement de côté et de dessus de la partie arrière du véhicule, illustrant le montage d'une traverse du porte-bagages modulaire de la figure 1,
- la figure 7 est une vue de l'arrière du véhicule, illustrant le montage de deux bras du porte-bagages modulaire de la figure 1,
- la figure 8 est une vue de côté de la partie arrière du véhicule, illustrant le montage d'un support oblong du porte-bagages modulaire de la figure 1,
- les figures 9A et 9B sont des vues d'un détail du porte-bagages modulaire de la figure 1, au niveau de la liaison avec la structure du véhicule, illustrant les moyens de bridages prévus respectivement du côté du porte-bagages et du côté de la structure du véhicule,

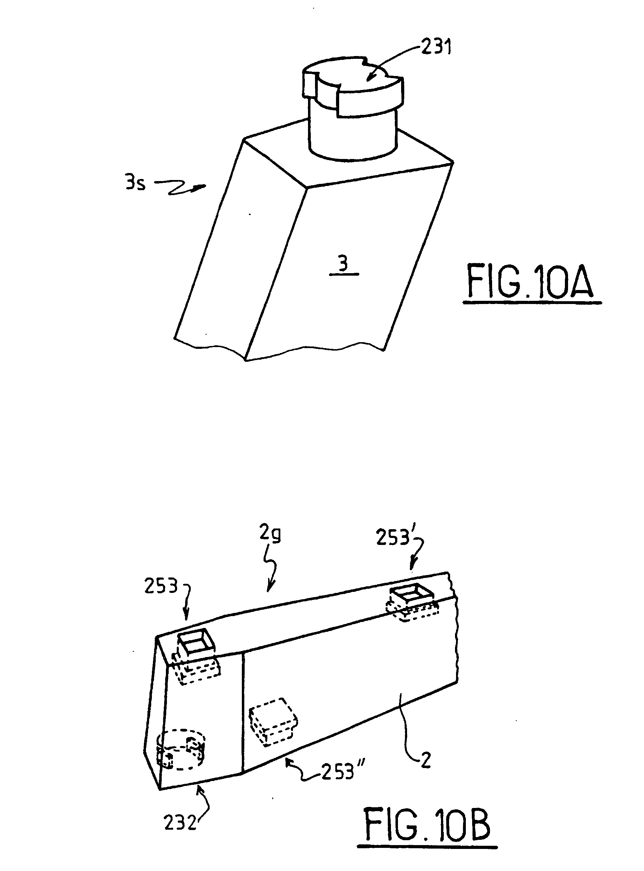

- les figures 10A et 10B sont des vues d'un détail du porte-bagages modulaire de la figure 1, au niveau de la liaison entre l'une des deux branches et une première extrémité de la traverse, illustrant les moyens d'ancrage prévus respectivement du côté de la branche et du côté de la traverse,
- les figures 11A et 11B sont des vues d'un détail du porte-bagages modulaire de la figure 1, au niveau de la liaison entre l'autre branche et la seconde extrémité de la traverse, illustrant les moyens d'ancrage prévus respectivement du côté de la branche et du côté de la traverse,
- la figure 12A est une vue d'un détail du porte-bagages de la figure 1, illustrant une extrémité d'un support oblong destinée à être ancrée sur un bras ou sur la traverse,
- la figure 12B est une vue d'un détail du porte-bagages de la figure 1, illustrant une extrémité d'un bras destinée à être ancrée sur la traverse,
- la figure 13 est une vue de la traverse du porte-bagages modulaire de la figure 1, illustrant les différentes zones d'ancrage prévues pour la fixation des éléments adjacents,
- la figure 14 est une vue en perspective du porte-bagages modulaire de la figure 1, dans une première configuration d'utilisation, prévue pour transporter un vélo adulte,
- la figure 15 est une vue en perspective du porte-bagages modulaire de la figure 1, dans une seconde configuration d'utilisation, prévue pour transporter un vélo enfant,
- la figure 16 est une vue en perspective du porte-bagages modulaire de la figure 1, dans une troisième configuration d'utilisation, prévue pour transporter un vélo adulte et un vélo enfant,
- la figure 17 est une vue en perspective du porte-bagages modulaire de la figure 1, dans une quatrième configuration d'utilisation, prévue pour transporter un bagage long,
- la figure 18 est une vue en perspective du porte-bagages modulaire de la figure 1, dans une cinquième configuration d'utilisation, prévue pour transporter un bagage court,
- la figure 19 est une vue en perspective du porte-bagages modulaire de la figure 1, dans une sixième configuration d'utilisation, prévue pour transporter une paire de ski,
- les figures 20 et 21 sont des vues partielles d'un véhicule automobile conforme à l'invention, respectivement en coupe transversale et en vue de dessus, illustrant un volet arrière pourvu d'un espace de rangement destiné à recevoir les éléments constitutifs du porte-bagages de la figure 1.

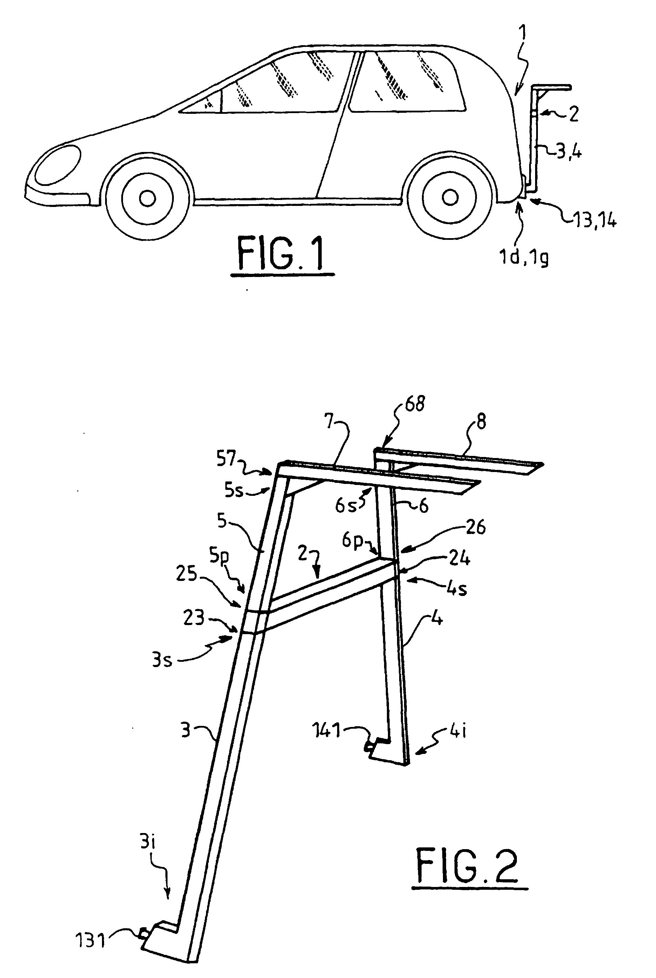

On a représenté à la figure 1 un véhicule automobile comportant dans sa partie arrière un porte-bagages modulaire conforme à l'invention.

Le porte-bagages peut être relié à sa base à la structure du véhicule via des moyens de bridage 1g, 1d que nous décrirons ultérieurement.

Le porte-bagages comporte un châssis constitué de deux branches latérales 3, 4 reliées à leur sommet 3s, 4s par une traverse 2 de sorte que le châssis a la forme générale d'un U inversé dans un plan sensiblement vertical. Les branches 3, 4 peuvent être sensiblement inclinées vers l'intérieur, de sorte que la distance les séparant est plus petite à leur sommet qu'à leur base, comme le montre la figure 2.

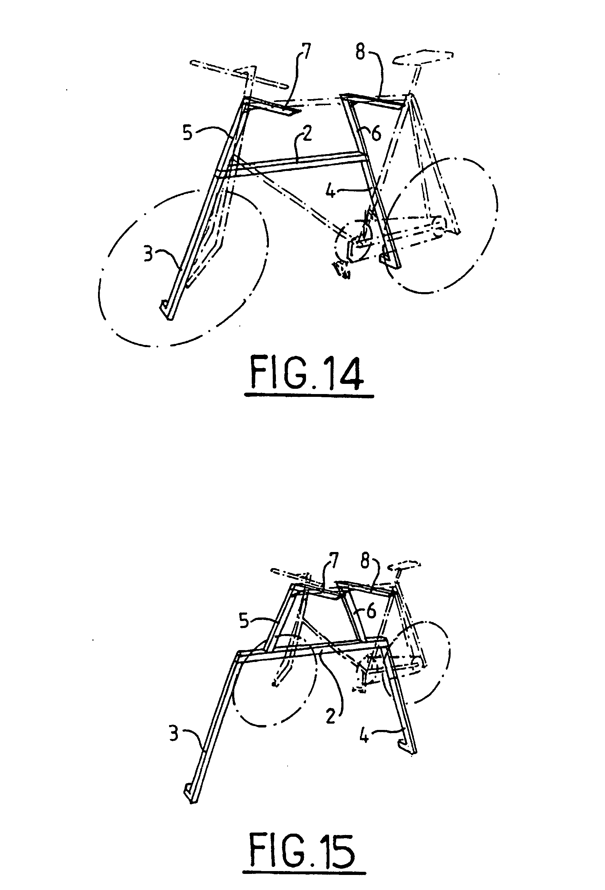

Le porte-bagages peut offrir une multitude de configurations d'utilisation. Par souci de clarté, nous limiterons dans un premier temps notre propos à la description d'une première configuration d'utilisation (figures 2 et 14).

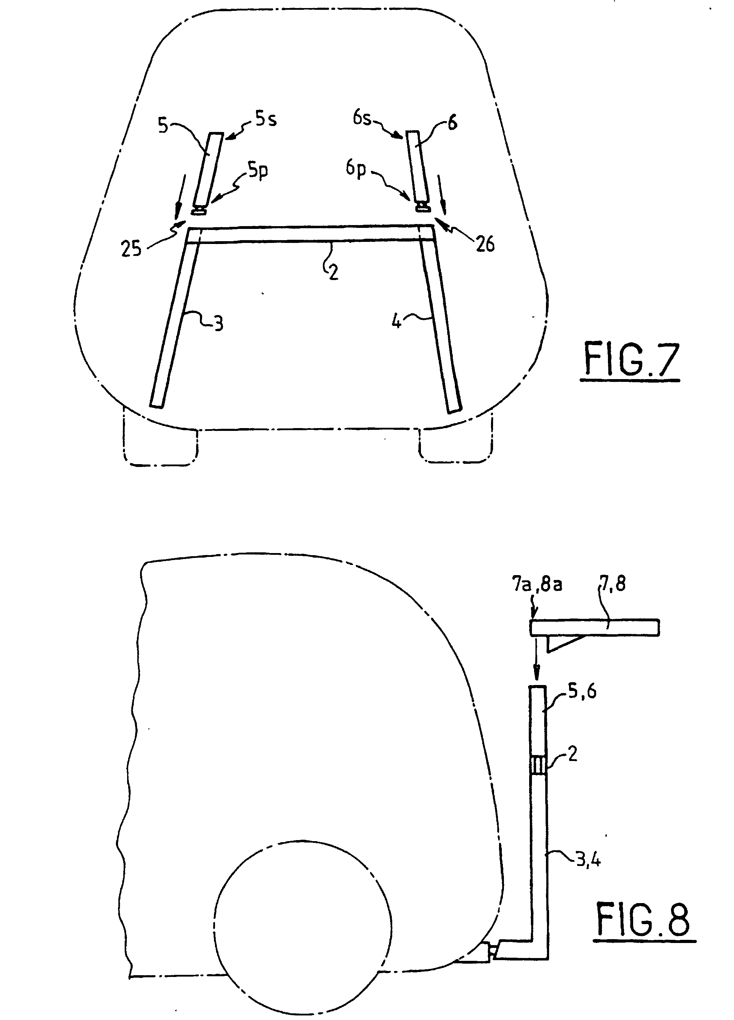

Dans cette première configuration d'utilisation, le châssis peut être surmonté de deux bras 5, 6 fixés sur un flan supérieur de la traverse 2 (figure 7), de façon à être placés dans le prolongement des branches 3, 4 du châssis. La longueur des bras 5, 6 peut par exemple être de l'ordre de la moitié de celle des branches 3, 4.

Aux extrémités supérieures 5s, 6s des bras 5, 6, deux supports oblongs 7, 8 respectifs peuvent être fixés, comme le montre la figure 8, pour supporter un bagage quelconque, par exemple un vélo.

Dans cette première configuration d'utilisation, les supports oblongs 7, 8 sont placés perpendiculairement au plan du U défini par le châssis. Ils sont fixés aux bras 5, 6 correspondants au niveau de leurs extrémités avant et s'étendent vers l'arrière du véhicule de façon à former une potence avec les autres éléments 2, 3, 4, 5, 6 du porte-bagages.

Décrivons plus en détail les moyens assurant la liaison entre les différents éléments de ce porte-bagages et entre ce dernier et la structure du véhicule.

De façon générale, l'ensemble de ces moyens de liaison sont verrouillables/déverrouillables manuellement, de façon à offrir une manipulation aisée et rapide à l'utilisateur.

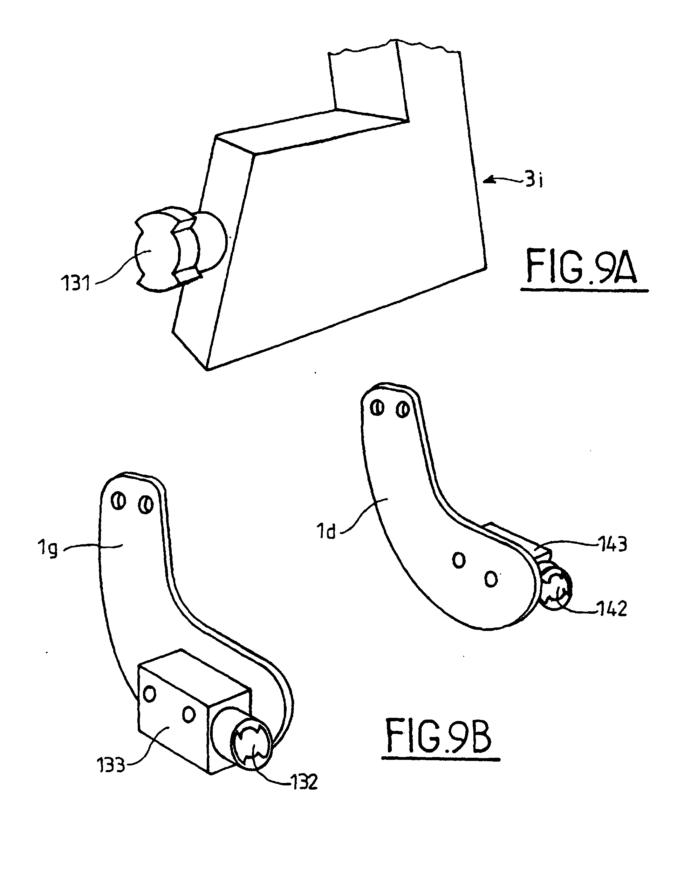

Comme représenté aux figures 2 et 9A, les branches 3, 4 sont reliées au niveau de leurs extrémités inférieures 3i, 4i à la structure 1g, 1d du véhicule via des moyens de bridage 13, 14 respectifs constitués par des systèmes de type quart-de-tour. Plus précisément, l'extrémité inférieure 3i, 4i de chaque branche 3, 4 est prolongée de façon perpendiculaire au plan du U, vers l'avant du véhicule, et comporte à son extrémité avant un pion 131, 141, conformé pour coopérer avec un logement correspondant 132, 142 formé dans un boîtier 133, 143 solidaire de la structure 1g, 1d du véhicule.

Notons que les boîtiers 133, 143 peuvent être fixés à des moyens de structure 1g, 1d déjà prévus sur le véhicule, par exemple à des consoles montées sur le soubassement du véhicule et destinées à supporter une barre d'attelage.

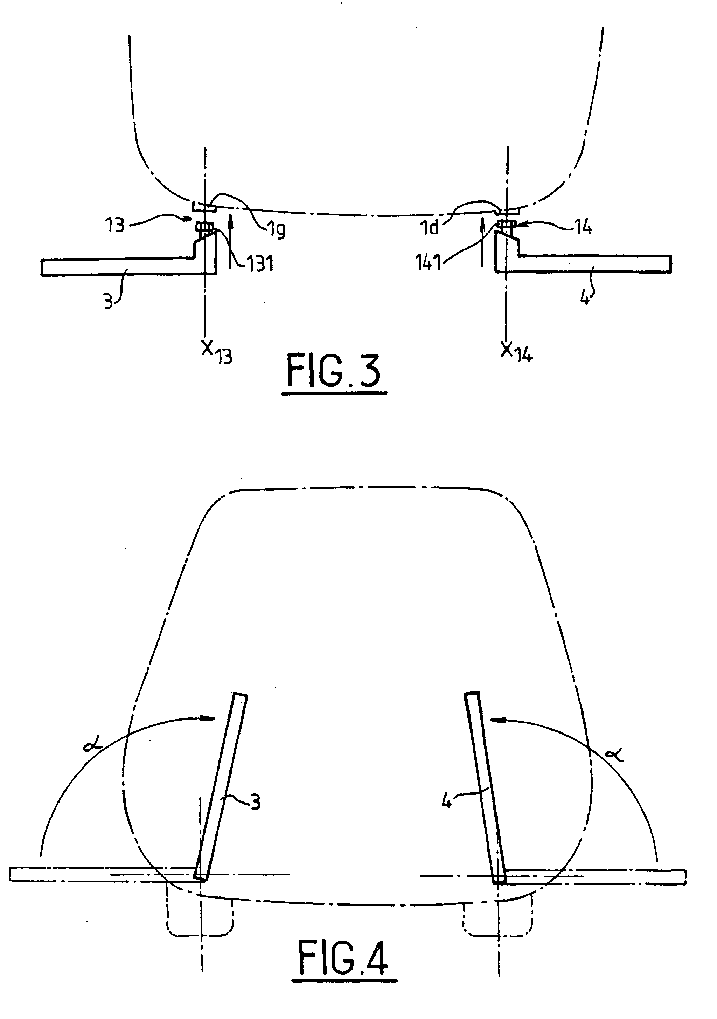

De cette façon, les pions 131, 132 des branches respectives 3, 4 peuvent être introduits dans les logements 132, 142 correspondants lorsque les branches 3, 4 se présentent suivant une certaine inclinaison dans un plan sensiblement vertical et transversal par rapport au véhicule. Les pions 131, 132 peuvent alors être emprisonnés dans ces logements 132, 142 lorsque les branches ont pivoté d'un certain angle α par rapport aux pions 131, 141 respectifs, c'est à dire autour de deux axes sensiblement longitudinaux X13, X14 par rapport au véhicule (figures 3 et 4).

De façon similaire, la traverse 2 est reliée au niveau d'une première extrémité 2g à l'une des branches du châssis, par exemple la branche 3 située du côté gauche par rapport au véhicule, via des moyens d'ancrage 23 constitués par un système de type quart-de-tour. Plus précisément, l'extrémité supérieure 3s de la branche 3 en question comporte un pion 231 conformé pour coopérer avec un logement correspondant 232 formé dans un flan inférieur de la traverse 2.

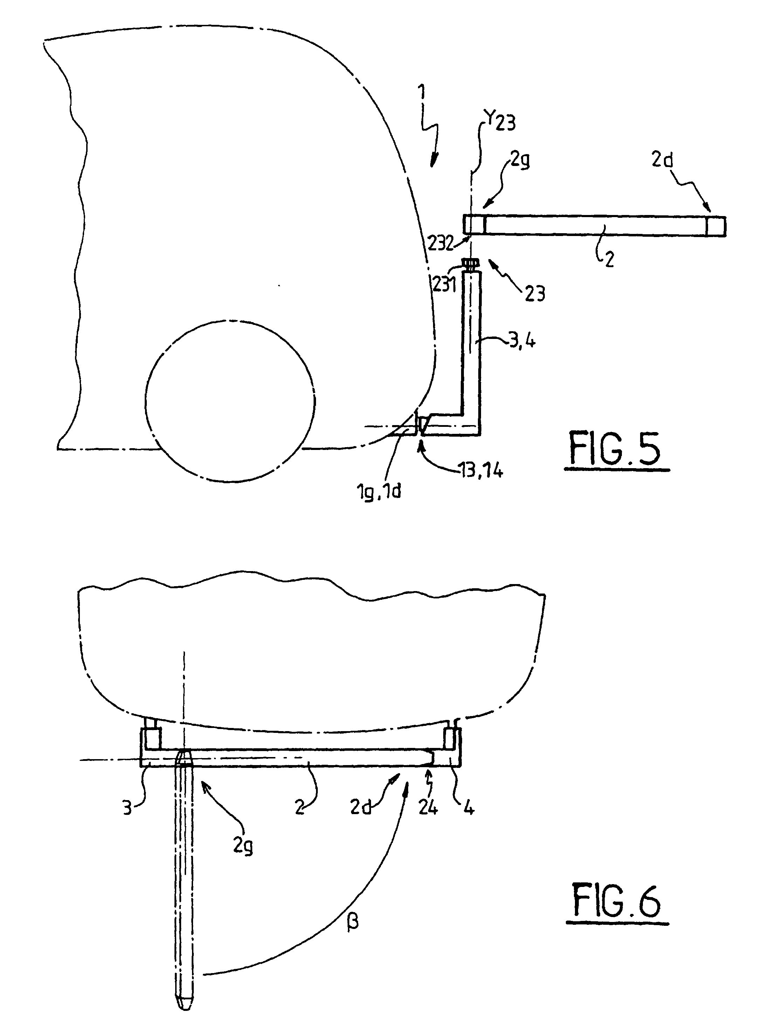

De cette façon, le pion 231 de la branche 3 peut être introduit dans le logement 232 correspondant lorsque la traverse 2 se présente suivant une certaine inclinaison dans un plan sensiblement horizontal. Le pion 231 peut alors être emprisonné dans ce logement 232 lorsque la traverse 2 a pivoté d'un certain angle β par rapport au pion 231, c'est à dire autour d'un axe sensiblement vertical Y23 (figures 5 et 6).

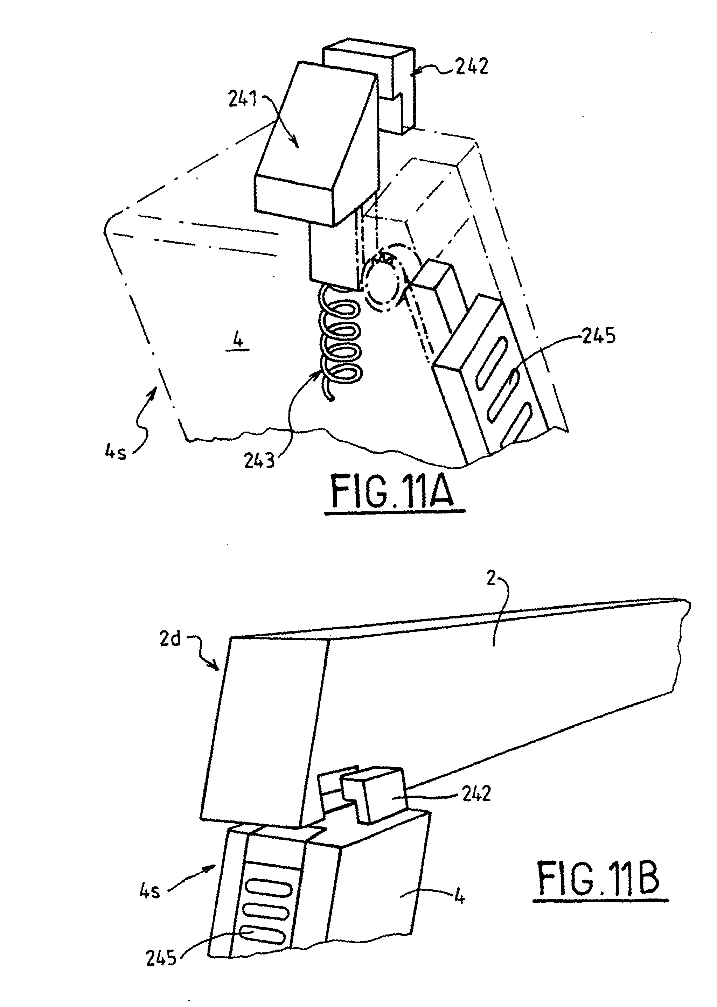

Comme représenté aux figures 11A et 11B, la seconde extrémité 2d de la traverse 2 est quant à elle reliée à l'autre branche du châssis, par exemple la branche 4 située du côté droit par rapport au véhicule, via des moyens d'ancrage 24 constitués par un système d'enclenchement.

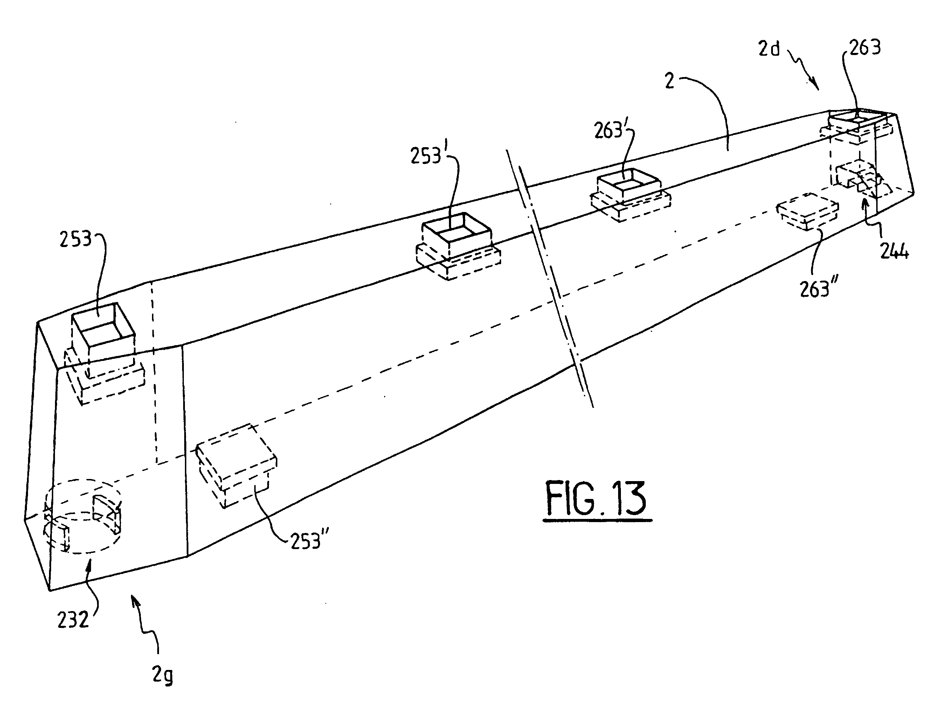

Dans ce dernier, un pêne 241 est monté mobile sur l'extrémité supérieure 4s de la branche 4 entre une position escamotée et une position déployée, selon l'action exercée sur un moyen de commande 245 associé. On peut observer que la position escamotée permet de positionner librement la seconde extrémité 2d de la traverse 2 au droit de l'extrémité supérieure 4s de la branche 4, notamment lorsque la traverse 2 pivote autour de l'axe vertical Y23 passant par sa première extrémité 2g. Ainsi, lorsque la seconde extrémité 2d de la traverse 2 est positionnée au droit de l'extrémité supérieure 4s de la branche 4, le pêne 241 peut être disposé dans sa position déployée, sous l'action d'un moyen de rappel 243 tel qu'un ressort, après relâchement du moyen de commande 245 associé. Dans cette position déployée, le pêne 241 s'introduit dans un logement 244 ménagé dans le flan inférieur de la seconde extrémité 2d de la traverse 2 (figure 13).

La seconde extrémité 2d de la traverse 2 peut ainsi être emprisonnée entre le pêne 241 et une butée 242 solidaire de la branche 4. Plus précisément, la butée 242 pénètre dans un creux ménagé dans un flan de la seconde extrémité 2d de la traverse 2 de façon à interdire tout déplacement de cette dernière vers l'avant du véhicule ou vers le haut. Le déplacement de la seconde extrémité 2d de la traverse 2 vers l'arrière du véhicule est quant à lui rendu impossible par l'obstacle que constitue le pêne 241 dans sa position déployée.

On comprendra que le simple verrouillage des moyens d'ancrage 24 entre la traverse 2 et l'une 4 des branches du châssis interdit ensuite tout déplacement ou pivotement de la traverse 2 ou des branches 3, 4, ce qui assure le blocage de l'ensemble du châssis.

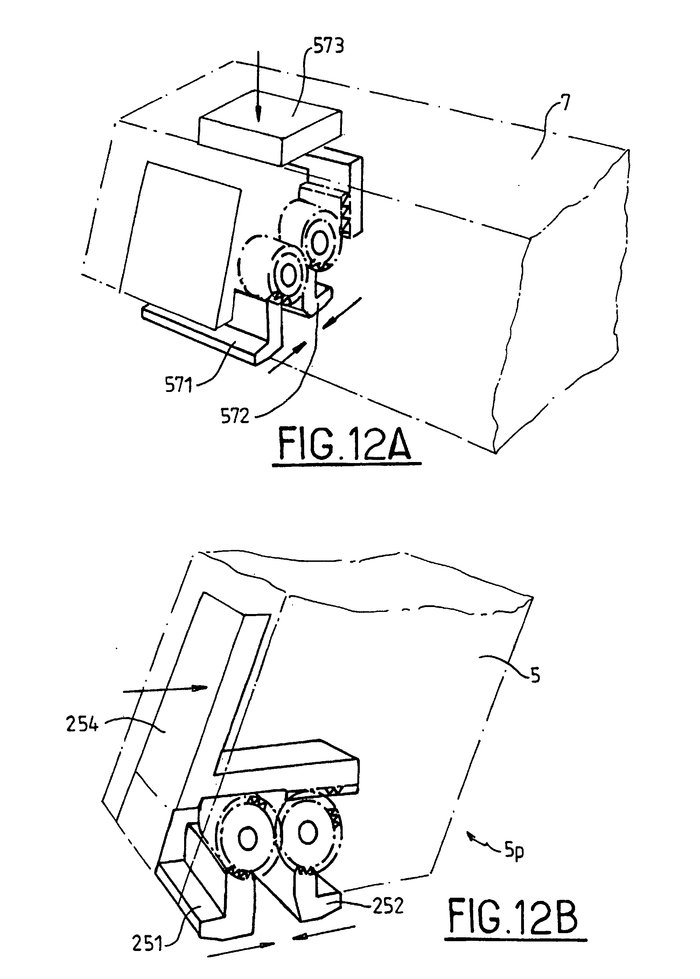

D'autre part, les moyens d'ancrage 25, 26 entre chacun des bras 5, 6 et la traverse 2 sont également constitués par des systèmes d'enclenchement (figure 12B).

Plus précisément, sur chacun des bras 5, 6, une première extrémité 5p, 6p comporte deux crochets 251, 252 maintenus écartés l'un de l'autre par un moyen de rappel tel qu'un ressort.

Sous l'action exercée sur un moyen de commande 254 associé, les crochets 251, 252 tendent à se resserrer, ce qui autorise leur introduction dans un logement correspondant 253 (figure 13) ménagé sur le flan supérieur de la traverse 2. On notera que l'introduction des crochets 251, 252 dans le logement 253 peut être facilitée par la forme biseautée des crochets 251, 252.

Lorsque les crochets 251, 252 sont introduits dans le logement 253 et se remettent dans leur position écartée sous l'action du moyen de rappel, ces crochets 251, 252 viennent coopérer en appui avec les rebords du logement 253 afin de solidariser chaque bras 5, 6 avec la traverse 2.

De façon similaire, les moyens d'ancrage 57, 68 entre les supports oblongs 7, 8 et les extrémités libres 5s, 6s des bras respectifs 5, 6 sont également constitués par des systèmes d'enclenchement (figure 12A). Précisons que dans la première configuration d'utilisation, les extrémités libres 5s, 6s des bras 5, 6 sont leurs extrémités supérieures. Ces moyens d'ancrage 57, 68 peuvent être identiques à ceux 25, 26 décrits précédemment entre les bras 5, 6 et la traverse 2, à ceci près que les crochets 571, 572 associés aux moyens d'ancrage 57, 68 peuvent être montés sur chacun des supports oblongs 7, 8 tandis que les logements destinés à coopérer avec ces crochets 571, 572 peuvent être ménagés aux extrémités libres 5s, 6s des bras 5, 6.

Nous venons de décrire les moyens de bridage et moyens d'ancrage reliant les différents éléments constitutifs du porte-bagages, en référence à la première configuration d'utilisation de ce dernier.

Selon l'invention, le porte-bagages offre de nombreuses autres configurations d'utilisation, en fonction de nouvelles dispositions possibles des bras 5, 6 et des supports oblongs 7, 8.

Avantageusement, la traverse 2 comporte une pluralité de zones d'ancrage 253, 253', 253", 263, 263', 263" situées sur les flans supérieurs et inférieurs de la traverse 2. C'est à dire qu'à chacune de ces zones d'ancrage, un logement est ménagé dans le flan de la traverse 2 de façon à pouvoir accueillir les crochets d'un bras 5, 6 ou ceux d'un support oblong 7, 8.

On notera que la traverse 2 peut constituer un profilé de conception relativement simple et de poids minimal étant donné qu'elle comporte l'ensemble des logements associés aux moyens d'ancrage avec les éléments adjacents du porte-bagages.

Parmi les configurations d'utilisation possible du porte-bagages on rappellera celle qui a été décrite précédemment (figure 2 et 14) et qui permet par exemple de supporter un vélo de taille adulte.

Dans une deuxième configuration d'utilisation du porte-bagages, comme représenté à la figure 15, les bras 5, 6 sont également disposés de façon parallèle aux branches respectives 3, 4 mais sont décalés vers l'intérieur, de sorte que l'écartement entre les supports oblongs 7, 8 situés aux extrémités libres 5s, 6s des bras respectifs 5, 6 soit minimal. Dans cette configuration, le porte-bagages permet par exemple de supporter un vélo de taille enfant.

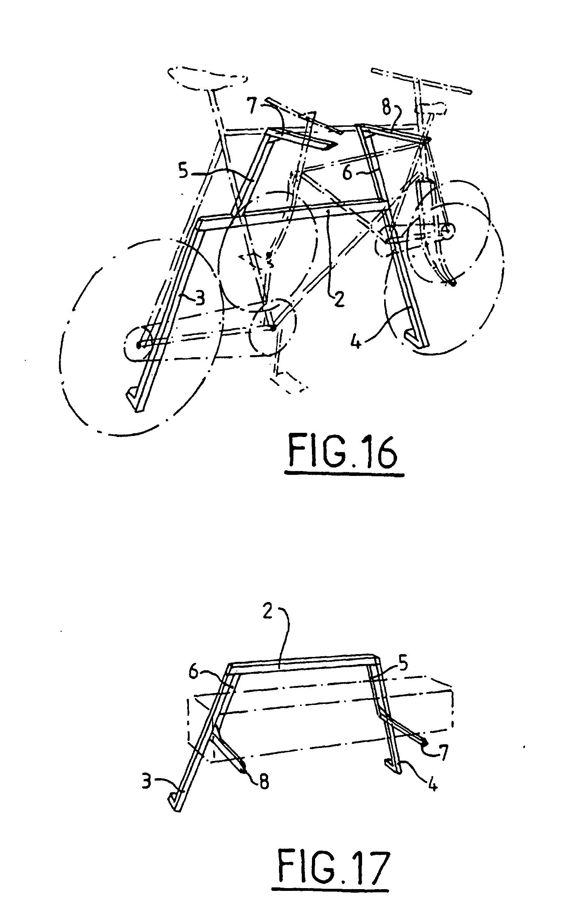

Dans une troisième configuration d'utilisation du porte-bagages, comme représenté à la figure 16, les bras 5, 6 sont également disposés de façon parallèle aux branches respectives 3, 4 mais l'un seulement des bras 5, 6 est décalé vers l'intérieur tandis que l'autre reste dans le prolongement de la branche voisine, de sorte que l'écartement entre les supports oblongs 7, 8 situés aux extrémités libres 5s, 6s des bras respectifs est intermédiaire. Dans cette configuration, le porte-bagages permet par exemple de supporter un vélo de taille enfant juxtaposé à un vélo de taille enfant.

Dans une quatrième configuration d'utilisation du porte-bagages, comme représenté à la figure 17, les bras 5, 6 sont disposés de façon parallèle aux branches 4, 3 respectives et sont fixés sur le flan inférieur de la traverse 2, de façon sensiblement juxtaposée aux branches 4, 3 respectives. Dans cette configuration, les supports oblongs 7, 8 fixés aux extrémités libres 5s, 6s des bras 5, 6 sont disposés au dessous de la traverse 2, par exemple à mi-hauteur des branches 4, 3 et présentent un écartement maximal, de façon à supporter efficacement un bagage de forme allongée.

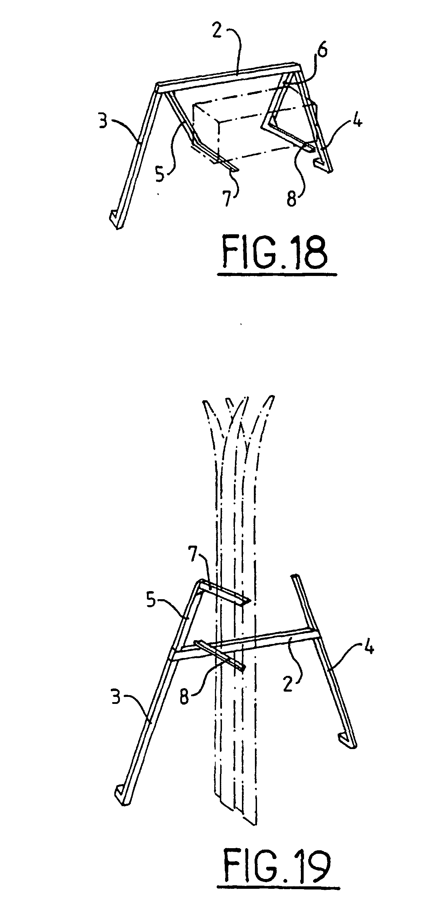

Dans une cinquième configuration d'utilisation du porte-bagages, comme représenté à la figure 18, les bras 5, 6 sont également fixés sur le flan inférieur de la traverse 2, parallèlement aux branches 4, 3 respectives, de sorte que les bras 5, 6 sont sensiblement adjacents aux branches 3, 4 respectives. Dans cette configuration d'utilisation, les supports oblongs 7, 8 fixés aux extrémités libres 5s, 6s des bras 5, 6 sont également disposés au-dessous de la traverse 2 et présentent un écartement minimal, de façon à supporter efficacement un bagage de forme compacte.

Dans une sixième configuration d'utilisation du porte-bagages, comme représenté à la figure 19, un bras 5 surmonté d'un support oblong 7 peut être fixé sur le flan supérieur de la traverse 2, dans le prolongement de l'une 3 des branches du châssis, tandis qu'un autre support oblong 8 est fixé directement sur la traverse, parallèlement au premier 7 et sensiblement au-dessous de celui-ci 7. Dans cette configuration d'utilisation, les supports oblongs 7, 8 forment des moyens d'accrochage pour un bagage long disposé de façon verticale, tel que des skis.

D'autres configurations d'utilisations du porte-bagages sont envisageables, en combinant les différentes zones d'ancrage de la traverse 2, les bras 5, 6 et les supports oblongs 7, 8.

Précisons que la fixation des bagages sur les supports oblongs 7, 8 et/ou sur les bras 5, 6 et/ou le châssis 2, 3, 4 peut être assurée par des sangles de serrage classiques, ou tout moyen équivalent. On comprendra que les supports oblongs 7, 8 et/ou les bras 5, 6 et ou le châssis 2, 3, 4 peuvent comporter des zones de maintien de ces sangles (non représenté). Ils peuvent également comporter des formes concaves ou convexes prévues pour faciliter le positionnement des bagages (non représenté).

En raison de la facilité de montage et de démontage offerte par le porte-bagages selon l'invention et des formes relativement allongées des différents éléments qui le constituent, ceux-ci peuvent avantageusement être démontés et placés à l'intérieur du véhicule avec un encombrement réduit, lorsque l'utilisation classique du porte-bagages dans sa fonction classique n'est pas nécessaire. Ainsi le porte-bagages peut être embarqué de façon permanente dans le véhicule, de façon à pouvoir être utilisé à tout moment.

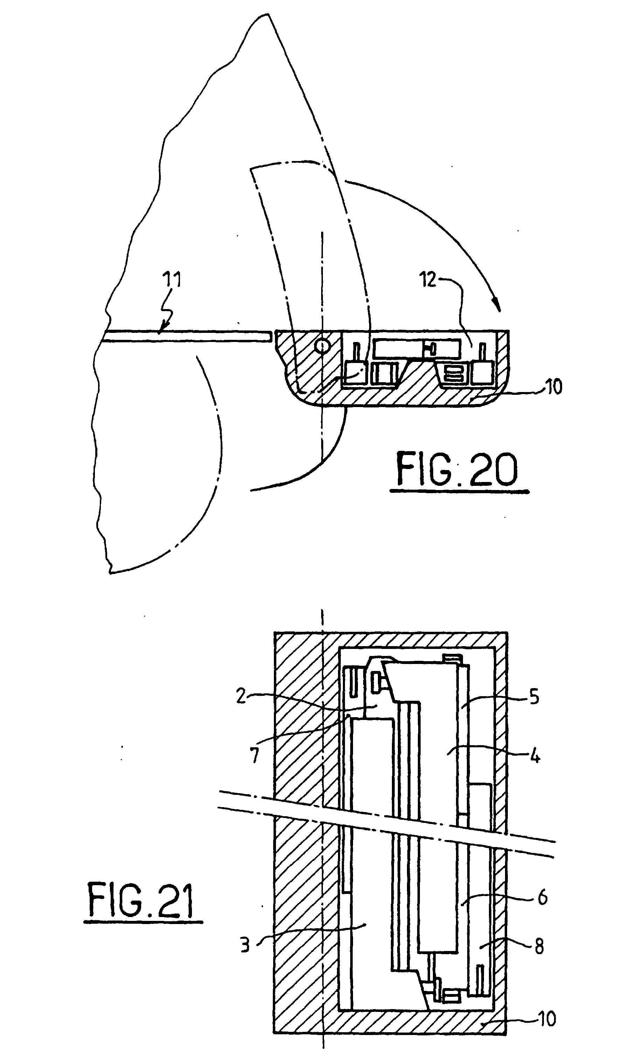

En se reportant à la figure 20, on comprendra que le porte-bagages selon l'invention peut avantageusement être prévu pour un véhicule comportant un volet arrière 10 articulé à sa base à la façon d'un véhicule couramment dénommé « pick-up », de façon à former un prolongement du plancher 11 de coffre.

Dans un tel véhicule, un espace de rangement 12 peut être prévu dans le corps du volet arrière pour recevoir les éléments constitutifs du porte-bagages, comme illustré à la figure 21. Ces éléments sont par exemple disposés de façon sensiblement parallèle à l'axe d'articulation du volet arrière 10.

Un panneau de garnissage (non représenté) peut être prévu pour recouvrir l'espace de rangement 12 à des fins esthétiques et pratiques. Bien entendu, des moyens de fixation rapide peuvent être montés sur le volet arrière 10 et/ou sur le panneau de façon à maintenir ce panneau contre le volet arrière 10.

Il apparaît clairement à la lecture de la description qui précède que le porte-bagages selon l'invention est particulièrement simple d'utilisation et ne requiert aucun outil ou effort particulier pour son montage ou son démontage. Il peut en outre être embarqué dans le véhicule de façon permanente. Son intégration parfaite dans le corps du volet arrière en fait un accessoire particulièrement séduisant dans la perspective des véhicules destinés à offrir une grande modularité d'utilisation.

Il est bien entendu que l'invention ne se limite pas aux seuls modes de réalisation décrits et représentés, mais qu'on peut imaginer de nombreuses variantes sans sortir pour autant du cadre de l'invention.

## Revendications

1. Porte-bagages modulaire pour véhicules, fixé à la partie arrière (1) du véhicule, comprenant un châssis (2, 3, 4) en forme de U inversé dans un plan sensiblement vertical, **caractérisé en ce qu'**une traverse (2) reliant les deux branches (3, 4) du U est fixée sur les extrémités supérieures (3s, 4s) respectives des branches (3, 4) via des moyens d'ancrage (23, 24) verrouillables/déverrouillables manuellement, tandis que les extrémités inférieures (3i, 4i) des branches (3, 4) sont reliées à la structure (1g, 1d) du véhicule par des moyens de bridage (13, 14), également verrouillables/déverrouillables manuellement lors de la rotation des branches (3, 4) autour de deux axes sensiblement longitudinaux par rapport au véhicule, situés respectivement à proximité des extrémités inférieures (3i, 4i) des deux branches (3, 4).

2. Porte-bagages modulaire selon la revendication 1, **caractérisé en ce que** les moyens de bridage (13, 14) respectifs des extrémités inférieures (3i, 4i) des branches (3, 4) avec la structure (1g, 1d) du véhicule sont des systèmes de type quart-de-tour dans lequel un pion (131, 141) solidaire de l'extrémité inférieure (3i, 4i) de chaque branche (3, 4), coopère avec un logement (132, 142) correspondant formé dans un boîtier (133, 143) solidaire de la structure (1g, 1d) du véhicule.

3. Porte-bagages modulaire selon la revendication 1 ou 2, **caractérisé en ce que** les moyens d'ancrage (23) d'une première extrémité (2g) de la traverse (2) avec l'une (3) des branches (3, 4) du U est un système de type quart-de-tour, dans lequel un pion (231) solidaire de l'extrémité supérieure (3s) de ladite branche (3) coopère avec un logement (232) correspondant formé sur la traverse (2), de sorte que la traverse (2) peut pivoter autour de sa première extrémité (2g) selon l'axe du pion (231) et se trouve verrouillée à sa première extrémité (2g) lorsqu'elle s'inscrit dans le plan formé par le U.

4. Porte-bagages modulaire selon la revendication 3, **caractérisé en ce que** les moyens d'ancrage (24) de la seconde extrémité (2d) de la traverse (2) avec l'une (4) des branches (3, 4) du U est un système par enclenchement dans lequel un pêne (241) est monté mobile sur l'extrémité supérieure (4s) de ladite branche (4), entre une position escamotée permettant de positionner librement la seconde extrémité (2d) de la traverse (2) au droit de l'extrémité supérieure (4s) de ladite branche (4), tout en autorisant le pivotement de la traverse (2) autour de sa première extrémité (2g), et une position déployée, retrouvée sous l'action d'un moyen de rappel (243), dans laquelle le pêne (241) est introduit dans un logement (244) formé sur la traverse (2), de sorte que la seconde extrémité (2d) de la traverse (2) est emprisonnée entre le pêne (241) et une butée (242) solidaire de la branche (4).

5. Porte-bagages modulaire selon l'une quelconque des revendications 1 à 4, **caractérisé en ce qu'**au moins un bras (5, 6) peut être fixé à une première (5p, 6p) de ses extrémités sur la traverse (2), dans le plan formé par le U, via des moyens d'ancrage (25, 26) verrouillables/déverrouillables manuellement.

6. Porte-babages modulaire selon la revendication 5, **caractérisé en ce qu'**une pluralité de zones d'ancrage (253, 253', 253", 263, 263', 263") sont ménagées sur la traverse (2) de sorte que le bras (5, 6) peut être fixé au niveau de l'une quelconque desdites zones d'ancrage (253, 253', 253", 263, 263', 263") sur la traverse (2) ou qu'une pluralité de bras (5, 6) peuvent être fixés sur celle-ci (2) en différentes zones d'ancrage respectives.

7. Porte-bagages modulaire selon la revendication 5 ou 6, **caractérisé en ce que** les moyens d'ancrage (25, 26) de la traverse (2) avec au moins l'un des bras (5, 6) sont constitués d'un système par enclenchement dans lequel au moins un crochet (251, 252) est monté mobile sur la première extrémité (5p, 6p) dudit bras (5, 6) adjacente à la traverse (2), entre une position inactive permettant de positionner librement la première extrémité (5p, 6p) du bras (5, 6) au droit de la traverse (2), et une position active, retrouvée sous l'action d'un moyen de rappel, dans laquelle le crochet (251, 252) est au moins partiellement introduit dans un logement (253) formé sur la traverse (2) et coopère en appui avec un rebord dudit logement (253), afin de solidariser le bras (5, 6) avec la traverse (2).

8. Porte-bagages modulaire selon la revendication 7, **caractérisé en ce qu'**une seconde extrémité (5s, 6s) de l'un au moins des bras (5, 6) montés sur la traverse (2) peut être prolongée de façon sensiblement perpendiculaire au plan formé par le U, par un support oblong (7, 8) apte à supporter une charge embarquée, le support (7, 8) étant fixé sur le bras via des moyens d'ancrage (57, 68) verrouillables/déverrouillables manuellement.

9. Porte-bagages modulaire selon l'une quelconque des revendications 5 à 8, **caractérisé en ce qu'**au moins un support oblong (7, 8) peut être fixé à l'une de ses extrémités sur la traverse (2), de façon sensiblement perpendiculaire au plan formé par le U, au niveau de l'une quelconque des zones d'ancrage (253, 253', 253", 263, 263', 263") ou qu'une pluralité de supports oblongs (7, 8) peuvent être fixés sur celle-ci (2) en différentes zones d'ancrage (253, 253', 253", 263, 263', 263") respectives.

10. Porte-bagages modulaire selon l'une quelconque des revendications 5 à 8, **caractérisé en ce que** les moyens d'ancrage (57, 68) de l'un au moins des supports oblongs (7, 8) sur un bras correspondant (5, 6) et/ou sur la traverse (2) sont constitués d'un système par enclenchement dans lequel au moins un crochet (571, 572) est monté mobile sur une extrémité avant (7a, 8a) du support oblong (7, 8), entre une position inactive permettant de positionner librement ladite extrémité avant (7a, 8a) du support oblong (7, 8) au droit de la seconde extrémité (5s, 6s) du bras (5, 6) et/ou de la traverse (2), et une position active, retrouvée sous l'action d'un moyen de rappel, dans laquelle le crochet (571, 572) est au moins partiellement introduit dans un logement (253') formé sur le bras (5, 6) et/ou sur la traverse (2) et coopère en appui avec un rebord dudit logement (253'), afin de solidariser le support oblong (7, 8) avec le bras (5, 6) et/ou la traverse (2).

11. Porte-bagages modulaire selon l'une quelconque des revendications 4 à 10, **caractérisée en ce que** les moyens d'ancrage (24) entre la seconde extrémité (2d) de la traverse (2) et l'une (4) des branches du U comportent un patin de commande ou bouton poussoir (245) monté coulissant sur un flan de la branche (4) et relié au pêne (241) via un ensemble pignon-crémaillère, de sorte que son coulissement provoque le déplacement du pêne (241).

12. Porte-bagages modulaire selon l'une quelconque des revendications 8 à 11, **caractérisée en ce que** les moyens d'ancrage (25, 26, 57, 68) entre d'une part les bras (5, 6) et d'autre part la traverse (2) et/ou les supports oblongs (7, 8) comportent chacun un patin de commande ou bouton poussoir (573) monté coulissant sur le bras (5, 6) correspondant et/ou le support oblong (7, 8) correspondant, et relié au crochet (251, 252, 571, 572) des moyens d'ancrage via un ensemble pignon-crémaillère, de sorte que son coulissement provoque le déplacement du crochet (251, 252, 571, 572).

13. Véhicule automobile équipé d'un porte-bagages modulaire selon l'une des revendications 1 à 12 et pourvu d'un volet arrière (10) articulé à sa base sur la structure du véhicule pouvant s'ouvrir vers le bas de façon à former un prolongement du plancher (11) de coffre, **caractérisé en ce que** le volet arrière (10) comporte un espace de rangement (12) pouvant recevoir ledit porte-bagages modulaire lorsque les éléments constitutifs du porte-bagages sont démontés et disposés de façon sensiblement parallèle à l'axe transversal du véhicule.

## Patentansprüche

1. Modularer Gepäckträger für Fahrzeuge, der am hinteren Abschnitt (1) des Fahrzeugs befestigt wird und einen Rahmen (2, 3, 4) in Form eines umgedrehten U in einer im Wesentlichen vertikalen Ebene aufweist, **dadurch gekennzeichnet, dass** ein Querträger (2), der die beiden Zweige (3, 4) des U verbindet, an den jeweiligen oberen Enden (3s, 4s) der Zweige (3, 4) durch manuell ver- und entriegelbare Verankerungsmittel (23, 24) befestigt ist, während die unteren Enden (3i, 4i) der Zweige (3, 4) durch Anflanschmittel (13, 14) mit dem Aufbau (1g, 1d) des Fahrzeugs verbunden sind, die sich beim Drehen der Zweige (3, 4) um zwei im Wesentlichen längs zum Fahrzeug verlaufende Achsen in der Nähe der unteren Enden (3i, 4i) der beiden Zweige (3, 4) ebenfalls manuell ver- und entriegeln lassen.

2. Modularer Gepäckträger nach Anspruch 1, **dadurch gekennzeichnet, dass** die Mittel zum Anflanschen (13, 14) der unteren Enden (3i, 4i) der Zweige (3, 4) am Aufbau (1g, 1d) des Fahrzeugs Systeme sind, die durch Vierteldrehung funktionieren und bei denen ein mit dem unteren Ende (3i, 4i) jedes Zweigs (3, 4) fest verbundenes Metallstück (131, 141) mit einer entsprechenden Aufnahme (132, 142) zusammenwirkt, die in einem mit dem Aufbau (1g, 1d) des Fahrzeugs fest verbundenen Gehäuse (133, 143) geformt ist.

3. Modularer Gepäckträger nach Anspruch 1 oder 2, **dadurch gekennzeichnet, dass** die Mittel zum Verankern (23) eines ersten Endes (2g) des Querträgers (2) an einem (3) der Zweige (3, 4) des U ein System sind, das durch Vierteldrehung funktioniert und bei dem ein mit dem oberen Ende (3s) des Zweigs (3) fest verbundenes Metallstück (231) mit einer entsprechenden Aufnahme (232) zusammenwirkt, die am Querträger (2) geformt ist, sodass der Querträger (2) um sein erstes Ende (2g) gemäß der Achse des Metallstücks (231) verschwenken kann und an seinem ersten Ende (2g) verriegelt wird, wenn er in die vom U gebildete Ebene einlenkt.

4. Modularer Gepäckträger nach Anspruch 3, **dadurch gekennzeichnet, dass** die Mittel zum Verankern (24) des zweiten Endes (2d) des Querträgers (2) an einem (4) der Zweige (3, 4) des U ein Verrastsystem sind, bei dem ein Riegel (241) am oberen Ende (4s) des Zweigs (4) zwischen einer eingezogenen Position und einer ausgefahrenen Position beweglich montiert ist, wobei es in der eingefahrenen Position möglich ist, das zweite Ende (2d) des Querträgers (2) frei im rechten Winkel zum oberen Ende (4s) des Zweigs (4) zu positionieren, und der Querträger (2) dabei um sein erstes Ende (2g) verschwenken kann, und wobei in der ausgefahrenen Position, die durch die Wirkung einer Rückstelleinrichtung (243) eingenommen wird, der Riegel (241) in eine Aufnahme (244) am Querträger (2) eingeführt wird, sodass das zweite Ende (2d) des Querträgers (2) zwischen dem Riegel (241) und einem fest mit dem Zweig (4) verbundenen Anschlag (242) eingeschlossen ist.

5. Modularer Gepäckträger nach einem der Ansprüche 1 bis 4, **dadurch gekennzeichnet, dass** mindestens ein Arm (5, 5) an einem ersten (5p, 6p) seiner Enden am Querträger (2) in der vom U gebildeten Ebene durch manuell ver- und entriegelbare Verankerungsmittel (25, 26) befestigt werden kann.

6. Modularer Gepäckträger nach Anspruch 5, **dadurch gekennzeichnet, dass** am Querträger (2) mehrere Verankerungsbereiche (253, 253', 253", 263, 263', 263") vorgesehen sind, sodass der Arm (5, 6) an einem dieser Verankerungsbereiche (253, 253', 253", 263, 263', 263") am Querträger (2) oder mehrere Arme (5, 6) an verschiedenen Verankerungsbereichen am Querträger (2) befestigt werden können.

7. Modularer Gepäckträger nach Anspruch 5 oder 6, **dadurch gekennzeichnet, dass** die Mittel zum Verankern (25, 26) des Querträgers (2) an mindestens einem der Arme (5, 6) von einem Verrastsystem gebildet werden, bei dem mindestens ein Haken (251, 252) am ersten, neben dem Querträger (2) liegenden Ende (5p, 6p) des Arms (5, 6) zwischen einer inaktiven Position und einer aktiven Position beweglich montiert ist, wobei es in der inaktiven Position möglich ist, das erste Ende (5p, 6p) des Arms (5, 6) frei im rechten Winkel zum Querträger (2) zu positionieren, und wobei in der durch die Wirkung einer Rückstelleinrichtung eingenommenen aktiven Position der Haken (251, 252) zumindest teilweise in eine Aufnahme (253) des Querträgers (2) eingeführt ist und durch Anlage mit einer Leiste der Aufnahme (253) zusammenwirkt, um den Arm (5, 6) fest mit dem Querträger (2) zu verbinden.

8. Modularer Gepäckträger nach Anspruch 7, **dadurch gekennzeichnet, dass** ein zweites Ende (5s, 6s) von mindestens einem der am Querträger (2) montierten Arme (5, 6) im Wesentlichen senkrecht zu der vom U gebildeten Ebene durch einen länglichen Träger (7, 8) verlängert werden kann, der eine Last tragen kann, wobei der Träger (7, 8) durch manuell ver- und entriegelbare Verankerungsmittel (57, 68) am Arm befestigt ist.

9. Modularer Gepäckträger nach einem der Ansprüche 5 bis 8, **dadurch gekennzeichnet, dass** mindestens ein länglicher Träger (7, 8) an einem seiner Enden am Querträger (2) im Wesentlichen senkrecht zu der vom U gebildeten Ebene an einem der Verankerungsbereiche (253, 253', 253", 263, 263', 263") befestigt werden kann oder mehrere längliche Träger (7, 8) an verschiedenen Verankerungsbereichen (253, 253', 253", 263, 263', 263") am Querträger (2) befestigt werden können.

10. Modularer Gepäckträger nach einem der Ansprüche 5 bis 8, **dadurch gekennzeichnet, dass** die Mittel zum Verankern (57, 68) von mindestens einem der länglichen Träger (7, 8) an einem entsprechenden Arm (5, 6) und/oder dem Querträger (2) aus einem Verrastsystem bestehen, bei dem mindestens ein Haken (571, 572) an einem vorderen Ende (7a, 8a) des länglichen Trägers (7, 8) zwischen einer inaktiven Position und einer aktiven Position beweglich montiert ist, wobei es in der inaktiven Position möglich ist, das vordere Ende (7a, 8a) des länglichen Trägers (7, 8) frei senkrecht zum zweiten Ende (5s, 6s) des Arms (5, 6) und/oder des Querträgers (2) zu positionieren, und wobei in der aktiven Position, die durch die Wirkung einer Rückstelleinrichtung eingenommen wird, der Haken (571, 572) zumindest teilweise in eine Aufnahme (253') eingeführt ist, die am Arm (5, 6) und/oder dem Querträger (2) geformt ist, und durch Anlage mit einer Leiste der Aufnahme (253') zusammenwirkt, um den länglichen Träger (7, 8) mit dem Arm (5, 6) und/oder dem Querträger (2) fest zu verbinden.

11. Modularer Gepäckträger nach einem der Ansprüche 4 bis 10, **dadurch gekennzeichnet, dass** die Verankerungsmittel (24) zwischen dem zweiten Ende (2d) des Querträgers (2) und einem (4) der Zweige des U einen Steuerschlitten oder einen Druckknopf (245) umfassen, der verschiebbar an einem Ausschnitt des Zweigs (4) montiert und durch eine Ritzel-Zahnstangen-Einheit mit dem Riegel (241) verbunden ist, sodass sein Verschieben ein Verschieben des Riegels (241) bewirkt.

12. Modularer Gepäckträger nach einem der Ansprüche 8 bis 11, **dadurch gekennzeichnet, dass** die Verankerungsmittel (25, 26, 57, 68) zwischen den Armen (5, 6) auf der einen und dem Querträger (2) und/oder den länglichen Trägern (7, 8) auf der anderen Seite jeweils einen Steuerschlitten oder einen Druckknopf (573) umfassen, der verschiebbar am entsprechenden Arm (5, 6) und/oder dem entsprechenden länglichen Träger (7, 8) montiert und über eine Ritzel-Zahnstangen-Einheit mit dem Haken (251, 252, 571, 572) der Verankerungsmittel verbunden ist, sodass sein Verschieben ein Verschieben des Hakens (251, 252, 571, 572) bewirkt.

13. Kraftfahrzeug, das mit einem modularen Gepäckträger nach einem der Ansprüche versehen ist und eine hintere Klappe (10) aufweist, die an ihrer Basis am Fahrzeugaufbau angelenkt ist und sich nach unten öffnen lässt, sodass sie eine Verlängerung des Bodens (11) des Kofferraums bildet, **dadurch gekennzeichnet, dass** die hintere Klappe (10) einen Stauraum (12) aufweist, der den modularen Gepäckträger aufnehmen kann, wenn seine Bestandteile demontiert und im Wesentlichen parallel zur Querachse des Fahrzeugs angeordnet sind.

## Claims

1. Modular luggage rack for vehicles, fixed to the rear part (1) of the vehicle, comprising a frame (2, 3, 4) in the shape of an inverted U in a substantially vertical plane, **characterised in that** a cross-piece (2) connecting the two branches (3, 4) of the U is fixed to the respective upper ends (3s, 4s) of the branches (3, 4) by manually lockable/unlockable anchoring means (23, 24), while the lower ends (3i, 4i) of the branches (3, 4) are connected to the structure (1g, 1d) of the vehicle by fastening means (13, 14), also manually lockable/unlockable when the branches (3, 4) are rotated about two axes substantially longitudinal to the vehicle, located near the lower ends (3i, 4i) of the two branches (3, 4) respectively.

2. Modular luggage rack according to Claim 1, **characterised in that** the respective means (13, 14) for fastening the lower ends (3i, 4i) of the branches (3, 4) to the structure (1g, 1d) of the vehicle are quarter-turn type systems in which a pin (131, 141) integral with the lower end (3i, 4i) of each branch (3, 4), co-operates with a corresponding housing (132, 142) formed in a casing (133, 143) integral with the structure (1g, 1d) of the vehicle.

3. Modular luggage rack according to Claim 1 or 2, **characterised in that** the means (23) for anchoring a first end (2g) of the cross-piece (2) to one (3) of the branches (3, 4) of the U is a quarter-turn type system, in which a pin (231) integral with the upper end (3s) of said branch (3) co-operates with a corresponding housing (232) formed on the cross-piece (2), so that the cross-piece (2) can pivot about its first end (2g) along the axis of the pin (231) and is locked at its first end (2g) when it lies within the plane formed by the U.

4. Modular luggage rack according to Claim 3, **characterised in that** the means (24) for anchoring the second end (2d) of the cross-piece (2) to one (4) of the branches (3, 4) of the U is a interlocking type system in which a bolt (241) is mounted so as to be mobile on the upper end (4s) of said branch (4), between a retracted position making it possible to freely position the second end (2d) of the cross-piece (2) in line with the upper end (4s) of said branch (4), while allowing the cross-piece (2) to pivot about its first end (2g), and an extended position, returned to by the action of a return means (243), in which the bolt (241) is introduced into a housing (244) formed on the cross-piece (2), so that the second end (2d) of the cross-piece (2) is captured between the bolt (241) and a stop (242) integral with the branch (4).

5. Modular luggage rack according to any one of Claims 1 to 4, **characterised in that** at least one arm (5, 6) can be fixed at a first one (5p, 6p) of its ends to the cross-piece (2), in the plane formed by the U, by manually lockable/ unlockable anchoring means (25, 26).

6. Modular luggage rack according to Claim 5, **characterised in that** a plurality of anchoring zones (253, 253', 253", 263, 263', 263") are produced on the cross-piece (2) so that the arm (5, 6) can be fixed in any one of said anchoring zones (253, 253', 253", 263, 263', 263") on the cross-piece (2) or that a plurality of arms (5, 6) can be fixed thereto (2) in different respective anchoring zones.

7. Modular luggage rack according to Claim 5 or 6, **characterised in that** the means (25, 26) for anchoring the cross-piece (2) to at least one of the arms (5, 6) are constituted by an interlocking type system in which at least one hook (251, 252) is mounted so as to be mobile on the first end (5p, 6p) of said arm (5, 6) adjacent to the cross-piece (2), between an inactive position making it possible to freely position the first end (5p, 6p) of the arm (5, 6) in line with the cross-piece (2), and an active position, returned to by the action of a return means, in which the hook (251, 252) is at least partly introduced into a housing (253) formed on the cross-piece (2) and co-operates in support with an edge of said housing (253), so as to make the arm (5, 6) integral with the cross-piece (2).

8. Modular luggage rack according to Claim 7, **characterised in that** a second end (5s, 6s) of at least one of the arms (5, 6) mounted on the cross-piece (2) can be extended substantially perpendicular to the plane formed by the U, by an oblong support (7, 8) capable of supporting a load that is loaded, the support (7, 8) being fixed to the arm by manually lockable/unlockable anchoring means (57, 68).

9. Modular luggage rack according to any one of Claims 5 to 8, **characterised in that** at least one oblong support (7, 8) can be fixed at one of its ends to the cross-piece (2), substantially perpendicular to the plane formed by the U, in any one of the anchoring zones (253, 253', 253", 263, 263', 263") or that a plurality of oblong supports (7, 8) can be fixed thereto (2) in various respective anchoring zones (253, 253', 253", 263, 263', 26".

10. Modular luggage rack according to any one of Claims 5 to 8, **characterised in that** the means (57, 68) for anchoring at least one of the oblong supports (7, 8) to a corresponding arm (5, 6) and/or to the cross-piece (2) are constituted by an interlocking type system in which at least one hook (571, 572) is mounted so as to be mobile on a front end (7a, 8a) of the oblong support (7, 8), between an inactive position making it possible to freely position said front end (7a, 8a) of the oblong support (7, 8) in line with the second end (5s, 6s) of the arm (5, 6) and/or of the cross-piece (2), and an active position, returned to by the action of a return means, in which the hook (571, 572) is at least partly introduced into a housing (253') formed on the arm (5, 6) and/or on the cross-piece (2) and co-operates in support with an edge of said housing (253'), so as to make the oblong support (7, 8) integral with the arm (5, 6) and/or the cross-piece (2).

11. Modular luggage rack according to any one of Claims 4 to 10, **characterised in that** the anchoring means (24) between the second end (2d) of the cross-piece (2) and one (4) of the branches of the U have a control shoe or push-button (245) mounted so as to slide over one blank of the branch (4) and connected to the bolt (241) by a rack-and-pinion assembly, so that its sliding motion causes the bolt (241) to be displaced.

12. Modular luggage rack according to any one of Claims 8 to 11, **characterised in that** the anchoring means (25, 26, 57, 68) between the arms (5, 6) on the one hand and the cross-piece (2) and/or the oblong supports (7, 8) on the other hand each comprise a control shoe or push-button (573) mounted so as to slide over the corresponding arm (5, 6) and/or the corresponding oblong support (7, 8), and connected to the hook (251, 252, 571, 572) of the anchoring means by a rack-and-pinion assembly, so that its sliding motion causes the hook (251, 252, 571, 572) to be displaced.

13. Motor vehicle equipped with a modular luggage rack according to one of Claims 1 to 12, provided with a rear shutter (10) articulated at its base to the structure of the vehicle, which can open downwards so as to form an extension of the boot floor (11 ), **characterised in that** the rear shutter (10) comprises a storage space (12) that can accommodate said modular luggage rack when the constituent elements of the luggage rack are dismounted and arranged substantially parallel to the transverse axis of the vehicle.
